# EUROPEAN PATENT SPECIFICATION

(11) **EP 4 145 032 B1**
(45) Date of publication and mention of the grant of the patent: **03.09.2025**
(21) Application number: 21822235.4
(22) Date of filing: 28.05.2021
(51) Int. Cl.: F16L 15/08, F24F 13/00, F16L 19/02, F16L 19/03, F16B 23/00

(54) **ANTI-DISASSEMBLY CONNECTION ASSEMBLY, AND AIR CONDITIONER**
MONTAGESICHERE VERBINDUNGSANORDNUNG UND KLIMAANLAGE
ENSEMBLE DE RACCORDEMENT ANTI-DÉMONTAGE ET CLIMATISEUR

(30) Priority: 09.06.2020 CN 202021045663 U; 30.12.2020 CN 202023333961 U
(43) Date of publication of application: 08.03.2023
(73) Proprietor: Zhejiang Dunan Artificial Environment Co., Ltd., Shaoxing Zhejiang 311835 (CN)
(72) Inventor: LOU, Feng, Shaoxing, Zhejiang 311835 (CN); CHEN, Diyong, Shaoxing, Zhejiang 311835 (CN); ZHOU, Feng, Shaoxing, Zhejiang 311835 (CN); TAN, Zhenyu, Shaoxing, Zhejiang 311835 (CN); GAO, Wansheng, Shaoxing, Zhejiang 311835 (CN); FENG, Guanghua, Shaoxing, Zhejiang 311835 (CN)
(74) Representative: Petraz, Gilberto Luigi
(86) International application number: PCT/CN2021/096770
(87) International publication number: WO 2021/249209

(56) References cited:
- CN-A- 103 672 222
- CN-A- 109 780 342
- CN-U- 207 470 951
- CN-U- 207 470 951
- CN-U- 207 648 289
- CN-U- 207 648 289
- CN-U- 208 503 696
- CN-U- 212 616 854
- CN-U- 213 018 176
- CN-U- 213 018 176
- KR-B1- 101 948 846

## Description

### CROSS-REFERENCE TO RELATED APPLICATIONS

This application claims priority to Chinese patent applications No. 202021045663.2, filed on June 9, 2020, titled "ANTI-DISASSEMBLY CONNECTOR, AND ANTI-DISASSEMBLY CONNECTION ASSEMBLY", and No. 202023333961.4, filed on December 30 12, 2020, titled "PIPE CONNECTOR, ANTI-DISASSEMBLY PIPE ASSEMBLY, AND AIR CONDITIONER".

### TECHNICAL FIELD

The present invention relates to the field of anti-disassembly connector of air conditioner, and in particular, to an anti-disassembly connector, an anti-disassembly connection assembly, and an air conditioner.

### BACKGROUND

At present, an indoor unit of a split air conditioner requires a non-detachable connector, so as to ensure inner sealing of the indoor unit and prevent refrigerant leakage caused by a mistaken disassembly. Usually, a single connector with a hexagonal nut is used to connect an evaporator with a connecting pipe, or a pipeline is welded to the single connector, so as to achieve an anti-disassembly function. However, the single connector and the hexagonal nut are easy to loosen, and the connection therebetween does not have the anti-disassembly function. When the anti-disassembly function is realized by welding the single connector to the pipeline, the cost is high and the operation process is complicated.

CN 207470951 U discloses a kind of anti-dismantling union nut, anti-dismantling pipe connection device and air conditioner. The anti-dismantling union nut includes a nut body and a twisting portion, and a twisting portion and the nut body are two individual parts, and the nut body includes a first end for being connected with pipe fitting and a second end for coordinating with the twisting portion. A lateral surface of first end is cylindrical surface, and a lateral surface of second end is generally cylindrical surface. A skewed slot extends along an unscrewing direction and gradually towards an end surface. And an abutting step is formed by an end of the skewed slot along a screwing direction.

CN 207648289 U discloses a disassembly prevention joint include an adapter body and a connector nut, wherein, the adapter body includes a main pipe and a limiting tooth being arranged outside the main pipe. The connector nut is fit with screw-thread of the adapter body, a limiting slot coordinated with limiting tooth is provided on the connector nut, and the limiting tooth has a normal thrust surface"; "a periphery of the adapter body is provided with an annular convex platform 13, and the limiting tooth is arranged on a surface, towards the connector nut, of the annular convex platform. By providing the limiting tooth on the annular convex platform, the processing of the limiting tooth is more convenient.

### SUMMARY

An anti-disassembly connector is provided in the present invention. An anti-disassembly protrusion is provided on a peripheral wall of the anti-disassembly connector, the anti-disassembly protrusion includes a force receiving surface and a force releasing surface, and the force receiving surface and the force releasing surface are arranged on both sides of the anti-disassembly protrusion along a circumference of the anti-disassembly connector.

The force receiving surface is configured to allow an external tool to assemble the anti-disassembly connector. The force releasing surface is configured to make the external tool to be pushed away by the anti-disassembly connector along an axis of the anti-disassembly connector when the anti-disassembly connector is disassembled by the external tool.

In this way, the anti-disassembly connector provided in the present invention has an anti-disassembly function, and can be fixed to and used in conjunction with a fastener. The external tool may be a wrench (such as a joint wrench or a nut wrench). In a process of mounting the anti-disassembly connector and the fastener with the wrench, the wrench may only generate a screwing torque to the anti-disassembly connector via a force receiving surface along a tightening direction, so as to tighten the fastener and the anti-disassembly connector; but cannot generate a loosening torque to the anti-disassembly connector along an opposite direction to disassemble the fastener and the anti-disassembly connector. In addition, the anti-disassembly protrusion is disposed on the peripheral wall of the anti-disassembly connector, which is more convenient for an operator to quickly sleeve the wrench on the peripheral wall of the anti-disassembly connector, and improve convenience of operation, especially for the anti-disassembly connector with small size. Furthermore, the anti-disassembly protrusion is disposed on the peripheral wall of the anti-disassembly connector, which increases a length of a force arm or a force couple arm of the screwing torque of the wrench to the anti-disassembly connector, so that the operator may finish the tightening between the fastener and the anti-disassembly connector more effortlessly.

In an embodiment, a force receiving edge is defined between an outer circumference surface of the anti-disassembly protrusion and force receiving surface, and the external tool is capable of clamping the force receiving edge and applying torque on the force receiving edge.

In this way, since the external tool is capable of clamping the force receiving edge and applying torque on the force receiving edge, the external tool may also be an ordinary wrench, such as an adjustable wrench or a flat wrench. When the ordinary wrench screws the anti-disassembly connector along a direction from the force receiving surface toward the outer circumference surface of the anti-disassembly protrusion, the ordinary wrench may be clamped at a side of the force receiving edge near the force receiving surface. At this moment, the ordinary wrench may screw the anti-disassembly connector and thus tighten the anti-disassembly connector. When the ordinary wrench screws the anti-disassembly connector along a direction from the outer circumference surface of the anti-disassembly protrusion toward the force receiving surface, a direction of force applied by the ordinary wrench is parallel to a tangent plane of the outer circumference surface of the anti-disassembly protrusion at the force receiving edge. Therefore, the ordinary wrench cannot apply force on the anti-disassembly protrusion, i.e., the ordinary wrench cannot loosen the anti-disassembly connector, thus achieving an anti-disassembly effect.

In an embodiment, the force receiving edge is parallel to the axis of the anti-disassembly connector.

In this way, when the ordinary wrench is clamped at the force receiving edge and the ordinary wrench screws the anti-disassembly connector along a direction from the force receiving surface toward the outer circumference surface of the anti-disassembly protrusion, the direction of force applied by the ordinary wrench may be perpendicular to the axis of the anti-disassembly connector. At this moment, a distance between the force applied by the ordinary wrench on the force receiving edge and the axis of the anti-disassembly connector may be maximum. It is known from common knowledge of physics that at this moment, a torque defined between the force applied by the ordinary wrench on the force receiving edge and the axis of the anti-disassembly connector can be maximum, and tightening effect of the anti-disassembly connector may be the best.

In an embodiment, the force receiving surface is a plane, and the force receiving surface is parallel to a plane of the axis of the anti-disassembly connector.

In this way, the force receiving surface may be in close contact with a corresponding mating surface of the joint wrench, and the force of the joint wrench applied on the force receiving surface may be perpendicular to an axis of a through hole. When the nut wrench and the joint wrench are used to connect the anti-disassembly connector to the fastener, the joint wrench may provide an abutting torque to the anti-disassembly connector along a circumference of the anti-disassembly connector without generating a component of force along the axis of the anti-disassembly connector, so that the anti-disassembly connector and the fastener may be screwed together quickly and effortlessly.

In an embodiment, an intersection line is defined between the force receiving surface and an outer circumference surface of the anti-disassembly connector, and the force receiving surface is perpendicular to a tangent plane of the outer circumference surface of the anti-disassembly connector at the intersection line.

In this way, the force receiving surface may be perpendicular to the tangent plane of a column body at the intersection line, which facilitates tightening of the anti-disassembly connector.

In an embodiment, the force releasing surface is selected from an inclined surface, a curved surface, or a concave surface.

In this way, the force releasing surface may be an inclined surface, a curved surface, or a concave surface. Therefore, a shape of the force releasing surface may be smoother, which may further reduce a friction coefficient between the force releasing surface and the joint wrench, thus avoiding a relative movement between the joint wrench and the force releasing surface from jamming or stalling. In addition, the smoother force releasing surface can facilitate moving of the external tool, so that the external tool will not apply a force on the anti-disassembly connector to loosen the anti-disassembly connector along an opposite direction, thereby achieving an anti-disassembly function of the anti-disassembly connector.

In an embodiment, the force releasing surface is smoothly engaged with the outer circumference surface of the anti-disassembly connector.

In this way, the external tool cannot be clamped between the force releasing surface and the outer circumference surface of the anti-disassembly connector to loosen the anti-disassembly connector, which further improves force releasing efficiency of the force releasing surface of the anti-disassembly connector, and make it more difficult to disassemble the anti-disassembly connector.

In an embodiment, the anti-disassembly connector includes a base. The base is located at an end of the anti-disassembly connector or on the peripheral wall of the anti-disassembly connector. The base includes a first end surface relatively near the anti-disassembly protrusion, and the first end surface is smoothly engaged with the force releasing surface.

In this way, the base may improve firmness of the connection between the anti-disassembly protrusion and the anti-disassembly connector. A smooth surface defined by the first end surface and the force releasing surface may significantly reduce the friction coefficient between the smooth surface and the joint wrench, avoid obviously crease or protrusion on the force releasing surface, and can prevent an abutting force or a static friction from generation between the anti-disassembly connector and the force releasing surface. Thus, the anti-disassembly effect of the anti-disassembly connector can be improved.

In an embodiment, an end of the anti-disassembly connector is provided with a male thread portion, the anti-disassembly connector further includes a column body, the male thread portion is located at an end of the column body, the anti-disassembly protrusion is located at the other end of the column body away from the male thread portion, and the base is connected to a side of the anti-disassembly protrusion away from the male thread portion. Optionally, a through hole is disposed in the anti-disassembly connector, and a female thread portion is located in the through hole.

In this way, the anti-disassembly connector can be threadedly connected to the fastener.

In an embodiment, a plurality of anti-disassembly protrusions are distributed along a circumference of the anti-disassembly connector, and the force receiving surface and the force releasing surface are alternately distributed along the circumference of the anti-disassembly connector.

In this way, the number of the force receiving surface of the anti-disassembly connector on which the external tool acts is increased, so that the external tool can apply force on more points of force when the external tool tightens the anti-disassembly connector, which improves stability of the external tool. In addition, the number of the force releasing surface is increased accordingly, improving releasing efficiency of the anti-disassembly connector for the external tool.

In an embodiment, the anti-disassembly protrusion includes a first protrusion and a second protrusion, which are rotationally and symmetrically disposed around the axis of the anti-disassembly connector as a center.

In this way, the force receiving surface of the first protrusion and the force receiving surface of the second protrusion are located on the same plane, which facilitates the external tool acting on the first protrusion and the second protrusion at the same time to tighten the anti-disassembly connector.

In an embodiment, a maximum outer diameter of the anti-disassembly protrusion is a maximum diameter of the anti-disassembly connector.

In this way, one skilled in the art may use the external tool to grip the outer circumference surface of the anti-disassembly protrusion, so as to forcibly disassemble the anti-disassembly connector and the fastener without damaging the force receiving surface or the force releasing surface of the anti-disassembly protrusion. Thus, the anti-disassembly connector can be repeatedly used.

In an embodiment, a distance between the force receiving edge of the first protrusion and the force receiving edge of the second protrusion is a maximum outer diameter of the anti-disassembly connector.

In this way, when the distance between the force receiving edge of the first protrusion and the force receiving edge of the second protrusion is a maximum outer diameter of the anti-disassembly connector, the ordinary wrench may be in contact with and clamp the force receiving edge, and the operator may use the ordinary wrench to mount the anti-disassembly connector more conveniently.

An anti-disassembly connection assembly is further provided in the present invention. The anti-disassembly connection assembly includes a fastener and the anti-disassembly connector. Either of the anti-disassembly connector and the fastener includes a female thread portion, the other one includes a male thread portion, and the male thread portion is threadedly connected to the female thread portion.

The anti-disassembly connection assembly provided in the present invention has an anti-disassembly function. The operator may only tighten the fastener and the anti-disassembly connector with a nut wrench matched with the fastener and a joint wrench matched with the anti-disassembly connector, but cannot loosen the fastener and the anti-disassembly connector.

In an embodiment, the anti-disassembly protrusion is located at an end of the anti-disassembly connector, and the other end of the anti-disassembly connector provided with the male thread portion, and the force releasing surface faces the male thread portion. An assembly hole is disposed in the fastener, the female thread portion is disposed in the assembly hole, and the female thread portion matches with the male thread portion of the anti-disassembly connector.

In an embodiment, the anti-disassembly connector is provided with a through hole, and the through hole is provided with the female thread portion. An end of the fastener protruding outwards along an axis thereof is provided with the male thread portion, and the male thread portion of the fastener extends into the through hole, and is threadedly connected to the anti-disassembly connector.

In this way, a more stable and reliable threaded connection may be formed between the anti-disassembly connector and the fastener.

An air conditioner provided in the present invention includes a first pipe, a second pipe, and the anti-disassembly connection assembly. The first pipe and the second pipe are connected to the anti-disassembly connector and the fastener, respectively.

In this way, assembly complexity of the air conditioner may be greatly reduced and assembly efficiency of the air conditioner may be improved.

In an embodiment, the first pipe is fixed to the anti-disassembly connector, and an end of the second pipe is clamped between the anti-disassembly connector and the fastener.

In this way, the assembly complexity of the air conditioner may be greatly reduced and the assembly efficiency of the air conditioner may be improved.

In an embodiment, a peripheral wall of an end of the anti-disassembly connector is provided with a first taper-shaped surface, an assembly hole of the fastener is provided with a second taper-shaped surface, correspondingly, and the end of the second pipe is provided with a taper-shaped clamping portion. The taper-shaped clamping portion is clamped between the first taper-shaped surface and the second taper-shaped surface.

In this way, a contact area between the taper-shaped clamping portion and the anti-disassembly connector and a contact area between the taper-shaped clamping portion and the fastener are increased, which facilitates improving assembly stability of the air conditioner.

In an embodiment, the anti-disassembly connector or the fastener is provided with a positioning section. The positioning section abuts against the first pipe and is configured to locate the first pipe; or, the positioning section abuts against the second pipe and is configured to locate the second pipe.

In this way, an inner wall surface of the positioning section may abut against an peripheral wall surface of either of the first pipe and the second pipe, thereby limiting a movement of either of the first pipe and the second pipe in the through hole and preventing either of the first pipe and the second pipe from sliding out from the through hole.

In an embodiment, the positioning section is provided with a taper-shaped positioning surface, the first pipe or the second pipe is provided with a flared portion at an end, and the taper-shaped positioning surface abuts against a peripheral wall of the flared portion.

In this way, it can ensure that the first pipe or the second pipe relative to the anti-disassembly connector or the fastener may be coaxially disposed, and positioning effect of the first pipe or the second pipe may be more reliable, and the first pipe or the second pipe may be hardly shake. In addition, the positioning section may abuts against the peripheral wall of the flared portion, so that the anti-disassembly connection assembly may have a better sealing effect and prevent refrigerant from leaking out of the through hole.

### BRIEF DESCRIPTION OF THE DRAWINGS

FIG. 1 is a schematic diagram of an anti-disassembly connector in an embodiment of the present invention.
FIG. 2 is a schematic diagram of the anti-disassembly connector shown in FIG. 1 from a first angle of view.
FIG. 3 is a schematic diagram of the anti-disassembly connector shown in FIG. 1 from a second angle of view.
FIG. 4 is a schematic diagram of a part of an air conditioner in an embodiment of the present invention.
FIG. 5 is a schematic diagram of the anti-disassembly connection assembly shown in FIG. 4 from a first angle of view.
FIG. 6 is a schematic diagram of the anti-disassembly connection assembly shown in FIG. 4 from a second angle of view.
FIG. 7 is a schematic diagram of the anti-disassembly connection assembly shown in FIG. 4 from a third angle of view.
FIG. 8 is a schematic diagram of an anti-disassembly connector in an embodiment of the present invention.
FIG. 9 is a schematic diagram of a part of the air conditioner in an embodiment of the present invention.
FIG. 10 is a sectional schematic diagram of the air conditioner shown in FIG. 9.

In the figures, 100 represents an anti-disassembly connector; 10 represents a column body; 11 represents a through hole; 111 represents a positioning section; 20 represents an anti-disassembly protrusion; 21 represents a force receiving surface; 211 represents a force receiving edge; 212 represents an intersection line; 22 represents a force releasing surface; 23 represents a first protrusion; 24 represents a second protrusion; 30 represents a male thread portion; 40 represents a base; 50 represents a first taper-shaped surface; 200 represents an anti-disassembly connection assembly; 210 represents a fastener; 2101 represents an assembly hole; 2102 represents a female thread portion; 2103 represents a second taper-shaped surface; 310 represents a first pipe; 320 represents a second pipe; 3201 represents a taper-shaped clamping portion; 330 represents a sealing ring.

### DETAILED DESCRIPTION

In order to make technical solutions in the present invention clearly and completely described, the present invention is described in further detail hereinafter with reference to the accompanying drawings. Obviously, the embodiments described are only a portion of the embodiments of the present invention, not all the embodiments. Based on the embodiments in the present invention, all other embodiments obtained by one skilled in the art without making creative labor fall within the scope of protection of the present invention.

It should be noted that when a component is considered to be "arranged" on another component, it may be directly arranged on the other component or an intervening component may be presented. When a component is considered to be "disposed" on another component, it may be directly disposed on the other component or an intervening component may be presented at the same time. When a component is considered to be "fixed" to another component, it may be directly fixed to the other component or an intervening component may be presented at the same time.

Unless otherwise defined, all technical and scientific terms used herein have the same meaning as commonly understood by one skilled in the art to which the present invention pertains. The terminology used in the description of the present invention is only for the purpose of describing specific embodiments and is not intended to limit the invention. As used herein, the term "and/or" includes any and all combinations of one or more associated listed items.

An anti-disassembly connector 100 is provided in the present invention. The anti-disassembly connector 100 is disposed in an indoor unit of a split air conditioner, and the anti-disassembly connector 100 is configured to be connected with an evaporator and a connecting pipe. It may be understood that in other embodiments, the anti-disassembly connector 100 may also be applied in other types of connection situations.

At present, an indoor unit of a split air conditioner requires a non-detachable connector, so as to ensure inner sealing of the indoor unit and prevent refrigerant leakage caused by a mistaken disassembly. Usually, a single connector with a hexagonal nut is used to connect an evaporator with a connecting pipe, or a pipeline is welded to the single connector, so as to achieve an anti-disassembly function. However, the single connector and the hexagonal nut are easy to loosen, and the connection therebetween does not have the anti-disassembly function. When the anti-disassembly function is realized by welding the single connector to the pipeline, the cost is high and the operation process is complicated.

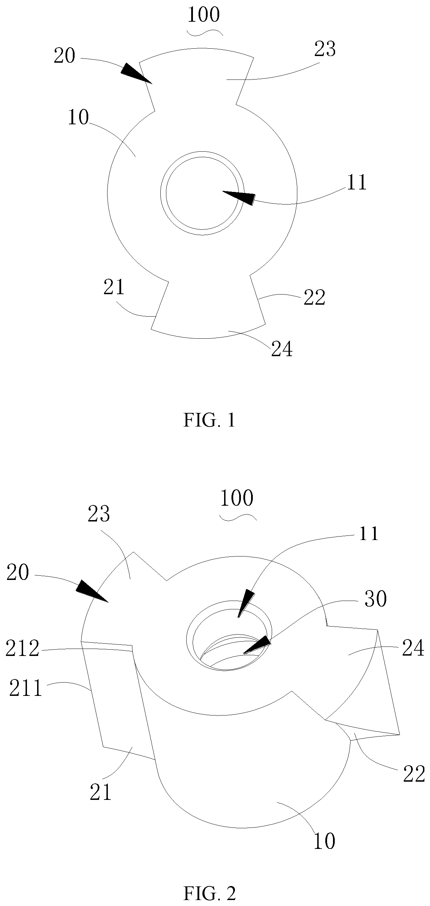

Referring to FIG. 1 to FIG. 3, in the present invention, an anti-disassembly protrusion 20 is provided on a peripheral wall of the anti-disassembly connector 100. The anti-disassembly protrusion 20 includes a force receiving surface 21 and a force releasing surface 22. The force receiving surface 21 and the force releasing surface 22 are arranged on both sides of the anti-disassembly protrusion 20 along a circumference of the anti-disassembly connector 100. The force receiving surface 21 is configured to allow an external tool to mount the anti-disassembly connector 100. The force releasing surface 22 is configured to make the external tool to be pushed away by the anti-disassembly connector 100 along an axis of the anti-disassembly connector 100 when the anti-disassembly connector 100 is disassembled by the external tool.

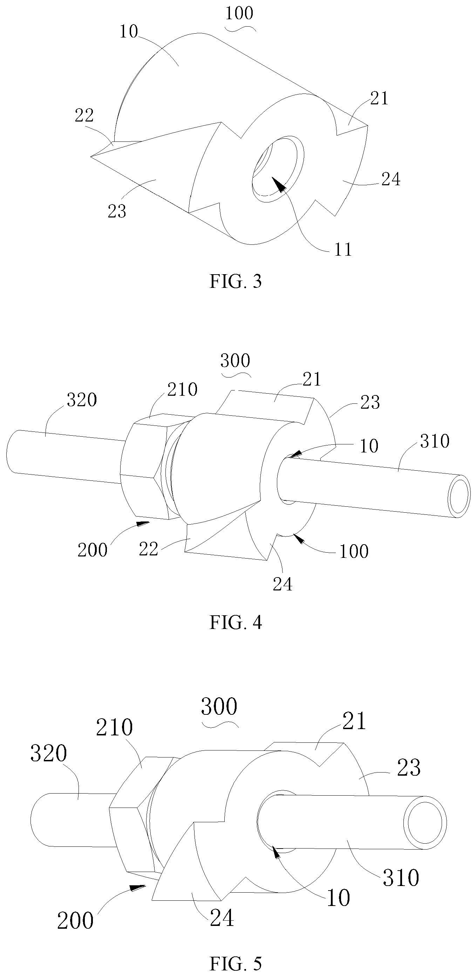

Referring to FIG. 4 to FIG. 7, in an embodiment, the anti-disassembly connector 100 includes an anti-disassembly joint. The anti-disassembly joint is substantially in a shape of pipe, and provided with a through hole 11 configured for a first pipe 310 to extend into. The anti-disassembly joint is used in conjunction with a fastener, a through hole 11 is disposed in the fastener for a second pipe 320 to extend into. The anti-disassembly joint is threadedly connected with the fastener. It may be understood that in other embodiments, the anti-disassembly connector 100 may also be an anti-disassembly nut, even the fastener and a pipe joint are provided with an anti-disassembly structure.

Specifically, the anti-disassembly connector 100 includes a column body 10. The peripheral wall of the column body 10 of the anti-disassembly connector 100 extending and protruding in a direction away from the axis of the anti-disassembly connector 100 is defined as the anti-disassembly protrusion 20. In this way, the anti-disassembly protrusion 20 may be firmer on the anti-disassembly connector 100.

In an embodiment, a force receiving edge 211 is defined between outer circumference surface of the anti-disassembly protrusion 20 and the force receiving surface 21. The external tool capable of clamping the force receiving edge 211 and applying torque on the force receiving edge.

In practical applications, the anti-disassembly connector 100 is threadedly connected to a fastener 210. The external tool may be a joint wrench or a nut wrench, or an ordinary wrench, such as an adjustable wrench or a flat wrench.

For example, the external tool includes the joint wrench that matches with the anti-disassembly protrusion 20 and the peripheral wall of the anti-disassembly connector 100, and further includes the nut wrench that is configured to clamp the fastener 210. The peripheral wall of the anti-disassembly connector 100 extending into the joint wrench is a surface of revolution, which facilitates rotation of joint wrench by the operator to apply a screwing torque to the anti-disassembly connector 100. When the joint wrench is sleeved on the anti-disassembly connector 100, the joint wrench is rotated to contact with the force receiving surface 21 or the force releasing surface 22. The joint wrench may generate a force or a component of force perpendicular to a radial direction of a cross section of the anti-disassembly connector 100, i.e., an abutting force applied on the force receiving surface 21, and thus the joint wrench and the force receiving surface 21 may abut against each other. The force releasing surface 22 may generate a component of force to the joint wrench along the axis of the anti-disassembly connector 100 to further rotate the joint wrench. Since it is hard to generate an abutting force or static friction force great enough between the joint wrench and the force releasing surface 22, the joint wrench may move relative to the force releasing surface 22, the joint wrench may be pushed away by the force releasing surface from the anti-disassembly connector 100 along the axis of the anti-disassembly connector 100.

The external tool configured to apply force to the anti-disassembly connector 100 may include the ordinary wrench or the nut wrench. When the ordinary wrench or the nut wrench screws the anti-disassembly connector 100 along a direction from the force receiving surface 21 toward the outer circumference surface of the anti-disassembly protrusion 20, the ordinary wrench or the nut wrench may be clamped at a side of the force receiving edge 211 near the force receiving surface 21. At this moment, the ordinary wrench or the nut wrench may be able to screw the anti-disassembly connector 100, so as to tighten the anti-disassembly connector 100. When the ordinary wrench or the nut wrench screws the anti-disassembly connector 100 along a direction from the outer circumference surface of the anti-disassembly protrusion 20 toward the force receiving surface 21, a direction of force applied by the ordinary wrench or the nut wrench may be parallel to a tangent plane of the outer circumference surface of the anti-disassembly protrusion 20 at the force receiving edge 211, so the ordinary wrench or the nut wrench cannot apply force to the anti-disassembly protrusion 20, i.e., the ordinary wrench or the nut wrench cannot loosen the anti-disassembly connector 100, thus achieving an anti-disassembly effect.

When the joint wrench is chosen to mount the anti-disassembly connector 100, a mounting process of the anti-disassembly connector 100 and the fastener 210 is as follows. Firstly, the anti-disassembly connector 100 is threadedly connected with the fastener 210 by the operator, and the fastener 210 is clamped by the nut wrench. Then the anti-disassembly connector 100 is matched with the joint wrench, and either of the joint wrench and the nut wrench is rotated along a tightening direction, i.e., a direction along which the joint wrench is attached to and abuts against the force receiving surface 21. At this moment, the nut wrench may apply a tightening torque to the fastener 210, the joint wrench may apply an abutting force to the force receiving surface 21, and the joint wrench may apply the screwing torque to the anti-disassembly connector 100. A direction of the screwing torque may be opposite to that of the tightening torque. With an interaction of the tightening torque and the screwing torque, the fastener 210 can be threadedly connected with the anti-disassembly connector 100. At the same time, the nut wrench and the fastener 210 are kept in a tightening state, and the joint wrench is rotated along an opposite direction to allow the joint wrench to be in contact with the force releasing surface 22. At this moment, the joint wrench cannot abut against the force releasing surface 22 and may slide along the force releasing surface 22, resulting in that the joint wrench cannot generate a loosening torque on the anti-disassembly connector 100 opposite to the screwing torque. Eventually, the joint wrench is released by the anti-disassembly protrusion 20, i.e., the joint wrench may only rotate along the tightening direction and generate the screwing torque to the anti-disassembly connector 100 by abutting against the force receiving surface 21, so that the anti-disassembly connector 100 is threadedly connected to the fastener 210, but the loosening torque cannot be applied to the anti-disassembly connector 100 along the opposite direction to loosen and separate the anti-disassembly connector 100 and the fastener 210. Therefore, it is not possible to disassemble the anti-disassembly connector 100 and the fastener 210.

When the anti-disassembly connector 100 is mounted with the ordinary wrench or the nut wrench, a mounting process of the anti-disassembly connector 100 and the fastener 210 is substantially the same as that described above, except that the ordinary wrench or the nut wrench may be clamped on the force receiving edge 211 to apply the screwing torque, but cannot apply the loosening torque via the force receiving edge 211.

The anti-disassembly connector 100 provided in the present invention has an anti-disassembly function, and is capable of being fixedly connected to and used in conjunction with a fastener 210. In a process of mounting the anti-disassembly connector 100 and the fastener 210 with the joint wrench, the nut wrench, or the ordinary wrench, the wrench may only generate the screwing torque to the anti-disassembly connector 100 via a force receiving surface 21 along the tightening direction, so as to tighten the fastener 210 and the anti-disassembly connector 100, but cannot generate the loosening torque to the anti-disassembly connector 100 along the opposite direction to disassemble the fastener 210 and the anti-disassembly connector 100. In addition, the anti-disassembly protrusion 20 may be disposed on the peripheral wall of the anti-disassembly connector 100, which is more convenient for the operator to quickly sleeve the wrench on the peripheral wall of the anti-disassembly connector 100, especially for the anti-disassembly connector 100 with small size. Besides, it is convenient for the operator to clamp the ordinary wrench or the nut wrench on the force receiving edge 211, thereby improving convenience of operation. Furthermore, the anti-disassembly protrusion 20 is disposed on the peripheral wall of the anti-disassembly connector 100, which may increase a length of a force arm or a force couple arm of the screwing torque of the wrench to the anti-disassembly connector 100, so that the operator may finish the tightening between the fastener 210 and the anti-disassembly connector 100 more effortlessly.

Alternatively, in an embodiment, the peripheral wall of the anti-disassembly connector 100 may be in a shape of furstum of cone. An outer diameter of the anti-disassembly connector 100 may increase along a direction along which the joint wrench approaches and sleeves on the anti-disassembly connector 100. It may be understood that in other embodiments, the peripheral wall of the anti-disassembly connector 100 may be surface of revolution in other shapes, such as a cylindrical surface, or a combination of a cylindrical surface and a furstum of cone.

In the present invention, the tightening direction may be clockwise, and a rotational direction of the force releasing surface 22 may be anticlockwise. In other embodiments, the tightening direction may be anticlockwise, and the rotational direction of the force releasing surface 22 may be clockwise.

In an embodiment, the force receiving edge 211 may be parallel to an axis of the anti-disassembly connector 100.

In this way, when the ordinary wrench is clamped at the force receiving edge 211 an screws the anti-disassembly connector 100 along the direction from the force receiving surface 21 toward the outer circumference surface of the anti-disassembly protrusion 20, the direction of force applied by the ordinary wrench may be perpendicular to the axis of the anti-disassembly connector 100. At this moment, a distance between the force applied by the ordinary wrench on the force receiving edge 211 and the axis of the anti-disassembly connector 100 may be maximum. It is known from common knowledge of physics that at this moment, a maximum torque defined between the force applied by the ordinary wrench on the force receiving edge 211 and the axis of the anti-disassembly connector 100 can be maximum, and tightening effect of the anti-disassembly connector may be the best.

In an embodiment, the force receiving surface 21 may be a plane, and the force receiving surface 21 may be parallel to a plane of the axis of the anti-disassembly connector 100.

In this way, the force receiving surface 21 may be in close contact with a corresponding mating surface of the joint wrench, and the force of the joint wrench applied on the force receiving surface 21 may be perpendicular to an axis of the through hole 11. When the nut wrench and the joint wrench are used to connect the anti-disassembly connector 100 to the fastener 210, the joint wrench may provide an abutting torque to the anti-disassembly connector 100 along the circumference of the anti-disassembly connector 100 without generating a component of force along the axis of the anti-disassembly connector 100, so that the anti-disassembly connector 100 and the fastener 210 may be screwed together quickly and effortlessly.

It may be understood that the force receiving surface 21 may also be a curved surface, and the force receiving surface 21 may be perpendicular to a radial direction of the through hole 11, as long as the joint wrench may match with the anti-disassembly connector 100, and the joint wrench may generate an abutting force or a component of abutting force to the force receiving surface 21 perpendicular to the radial direction of the anti-disassembly connector 100, so as to generate the screwing torque to the anti-disassembly connector 100.

In an embodiment, an intersection line is defined between the force receiving surface 21 and an outer circumference surface of the column body 10, and the force receiving surface 21 may be perpendicular to a tangent plane of the column body 10 at the intersection line 212. The force releasing surface 22 may be selected from an inclined surface, a curved surface, or a concave surface. The direction of the force applied by the external tool may be perpendicular to the force receiving surface 21, and the force receiving surface 21 may be perpendicular to the tangent plane of the column body 10 at the intersection line 212, so that the direction of the force applied by the external tool may be parallel to the tangent plane. It is known from common sense that the tangent plane at the intersection line 212 may be perpendicular to a curvature radius of the column body 10 at the intersection line 212, so that the direction of the force applied by the external tool may be perpendicular to the curvature radius of the column body 10 at the intersection line 212. It is known from the physics formula that a relationship among a torque (denoted as M), a length of a force arm (denoted as L), a magnitude of the force (denoted as F) and an angle between the force and the force arm (denoted as A) may be shown as the formula herein: M=L*F*sin A. When the force is perpendicular to the force arm, the torque is the maximum. That is, when the direction of the force applied by the external tool is perpendicular to the curvature radius of the column body 10 at the intersection line 212, the torque applied by the external tool may to the anti-disassembly connector 100 may be maximum, which facilitates a tightening of the anti-disassembly connector 100. The force releasing surface 22 may be an inclined surface, or a curved surface. A shape of the force releasing surface 22 may be smoother, which may further reduce a friction coefficient between the force releasing surface 22 and the joint wrench, thus avoiding a relative movement between the joint wrench and the force releasing surface 22 from jamming or stalling. In addition, the smoother force releasing surface 22 can facilitate moving of the external tool, so that the external tool will not apply a force on the anti-disassembly connector 100 to loosen the anti-disassembly connector 100 along the opposite direction, thereby achieving the anti-disassembly function of the anti-disassembly connector 100.

Optionally, in an embodiment, the force releasing surface 22 may be a helical surface centered on the axis of the anti-disassembly connector 100. The force releasing surface 22 may be concave along a direction along which the joint wrench is set on the anti-disassembly connector 100, as viewed from a side of the anti-disassembly connector 100.

In this way, the shape of the force releasing surface 22 may be smoother, which may further reduce the friction coefficient between the force releasing surface 22 and the joint wrench, thus avoiding the movement of joint wrench relative to the force releasing surface 22 from jamming or stalling, and achieving the anti-disassembly function of the anti-disassembly connector 100 better.

It may be understood that the force releasing surface 22 may protrude along the axis of the anti-disassembly connector 100, which is not repeated herein.

In an embodiment, the force releasing surface 22 may be smoothly engaged with the outer circumference surface of the anti-disassembly connector 100. In this way, the external tool cannot loosen the anti-disassembly connector 100 by clamping between the force releasing surface 22 and the outer circumference surface of the anti-disassembly connector 100. The force releasing efficiency of the force releasing surface 22 of the anti-disassembly connector 100 can be further improved, so that the anti-disassembly connector 100 is more difficult to disassemble.

In an embodiment, the anti-disassembly connector 100 may further include a base 40. The base 40 may be located at an end of the anti-disassembly connector 100 or the peripheral wall of the anti-disassembly connector 100. The base 40 may include a first end surface relatively near the anti-disassembly protrusion 20, and the first end surface may be smoothly engaged with the force releasing surface 22.

In this way, the base 40 may improve firmness of the connection between the anti-disassembly protrusion 20 and the anti-disassembly connector 100. A smooth surface defined by the first end surface and the force releasing surface 22 may significantly reduce the friction coefficient between the smooth surface and the joint wrench, avoid obviously crease or protrusion on the force releasing surface 22, and can prevent an abutting force or a static friction from generation between the anti-disassembly connector 100 and the force releasing surface 22. Thus, the anti-disassembly effect of the anti-disassembly connector 100 can be improved.

In an embodiment, the base 40 may be located at the end of the anti-disassembly connector 100 or the peripheral wall of the anti-disassembly connector 100. The base 40 is capable of stopping the external tool and is configured to limit a depth to which the external tool may be sleeved on the anti-disassembly connector 100.

Specifically, in the embodiment, the base 40 is capable of stopping the joint wrench and limiting the depth to which the joint wrench may be sleeved on the anti-disassembly connector 100.

In this way, the base 40 may limit the joint wrench to further set on the anti-disassembly connector 100, and prevent the joint wrench from colliding and interfering with the fastener 210 or other important external components and causing unnecessary damage. In addition, the base 40 may enable a part of the joint wrench which matches with the anti-disassembly protrusion 20 to keep a maximum mating area with the anti-disassembly connector 100. Therefore, matching between the joint wrench and the anti-disassembly protrusion 20 is more reliable in the process of tightening the anti-disassembly connector 100 with the fastener 210, thereby preventing the joint wrench from slipping out from the anti-disassembly connector 100 and the fastener 210.

In an embodiment, the base 40 may be a circular table-shaped structure provided at the end of the anti-disassembly connector 100, and an outer diameter of the base 40 may be greater than that of the peripheral wall of the anti-disassembly connector 100. The external tool may be set on the peripheral wall of the anti-disassembly connector 100 from an end of the anti-disassembly connector 100 that is away from the base 40, and the first end surface may stop an end of the external tool. The force releasing surface 22 may be concave along the axis of the anti-disassembly connector 100, so that both the force releasing surface 22 and the first end surface can define a smooth surface without crease or protrusion.

In this way, the anti-disassembly effect of the anti-disassembly connector 100 may be more outstanding. The smooth surface defined by the first end surface and the force releasing surface 22 may significantly reduce the friction coefficient between the smooth surface and the joint wrench, prevent the force releasing surface 22 from creasing or protruding significantly, avoid generating abutting force or static friction between the anti-disassembly connector 100 and the force releasing surface 22, so as to improve the anti-disassembly effect of the anti-disassembly connector 100.

In an embodiment, a maximum outer diameter of the anti-disassembly protrusion 20 may be a maximum diameter of the anti-disassembly connector 100.

In this way, the one skilled in the art may use the external tool to grip the outer circumference surface of the anti-disassembly protrusion 20, so as to forcibly disassemble the anti-disassembly connector 100 and the fastener 210 without damaging the force receiving surface 22 or the force releasing surface 21 of the anti-disassembly protrusion 20. Thus, the anti-disassembly connector 100 can be repeatedly used.

Furthermore, a distance between the force receiving edge 211 of a first protrusion 23 and the force receiving edge 211 of a second protrusion 24 is defined as a maximum outer diameter of the anti-disassembly connector 100.

In this way, when the distance between the force receiving edge 211 of the first protrusion 23 and the force receiving edge 211 of the second protrusion 24 is a maximum outer diameter of the anti-disassembly connector 100, the ordinary wrench may be in contact with and clamp the force receiving edge 211, and the operator may use the ordinary wrench to mount the anti-disassembly connector 100 more conveniently.

In an embodiment, a plurality of anti-disassembly protrusions 20 may be distributed along the circumference of the anti-disassembly connector 100, and the force receiving surface 21 and the force releasing surface 22 may be alternately distributed along the circumference of the anti-disassembly connector 100.

In this way, the number of the force receiving surface 21 of the anti-disassembly connector 100 on which the external tool acts may be increased, so that the external tool can apply force on more points of force when the external tool tightens the anti-disassembly connector 100, which improves stability of the external tool. In addition, the number of the force releasing surface 22 may be increased accordingly, improving releasing efficiency of the anti-disassembly connector 100 for the external tool.

In an embodiment, the anti-disassembly protrusion 20 includes the first protrusion 23 and the second protrusion 24, which are rotationally and symmetrically disposed around the axis of the anti-disassembly connector 100 as a center.

In this way, the force receiving surface 21 of the first protrusion 23 and the force receiving surface 21 of the second protrusion 24 may be located on the same plane, which facilitates the external tool acting on the first protrusion 23 and the second protrusion 24 at the same time to tighten the anti-disassembly connector 100.

In an embodiment, at least two anti-disassembly protrusions 20 may be evenly distributed on the peripheral wall of the anti-disassembly connector 100 along the circumference of the anti-disassembly connector 100.

In this way, when one anti-disassembly protrusion 20 is damaged due to slippage of the joint wrench, etc., the joint wrench may match with the other anti-disassembly protrusion 20 without affecting a tightening and mounting of the fastener 210 and the anti-disassembly connector 100.

In another aspect, the plurality of anti-disassembly protrusions 20 has a plurality of force receiving surfaces 21, which may increase a contact area between the joint wrench and the force receiving surface 21. The joint wrench may abut against the force receiving surface 21 more firmly, reducing a risk of the joint wrench slipping off from the anti-disassembly connector 100, and further reducing stress applied on a root of each anti-disassembly protrusion 20 near the peripheral wall of the anti-disassembly connector 100. Eventually, a risk of the anti-disassembly protrusion 20 breaking or being crushed may be reduced when a great screwing torque is applied to the anti-disassembly connector 100 and a greater tightening torque is applied to the fastener 210.

In an embodiment, referring to FIG. 1 to FIG. 7, the through hole 11 may be disposed in the anti-disassembly connector 100, and the through hole 11 may include a female thread portion 2102.

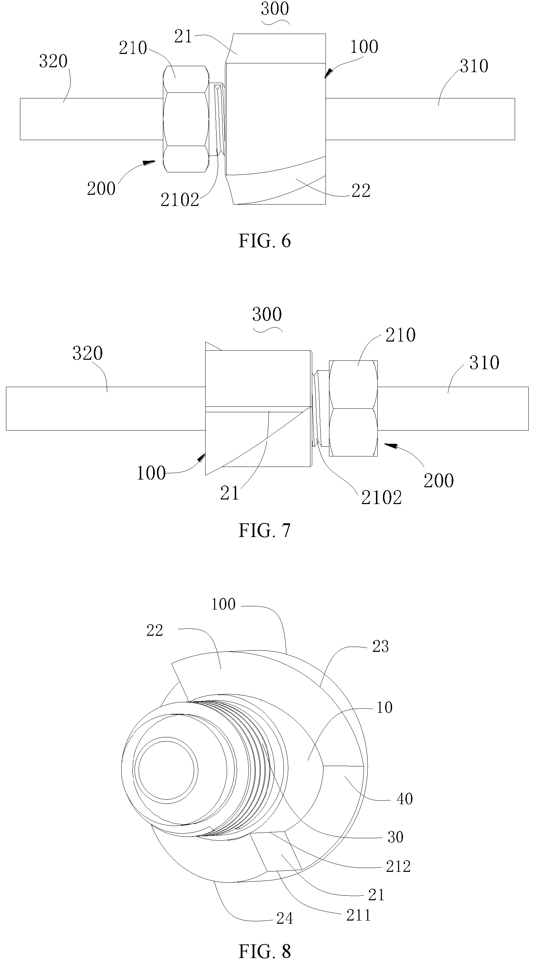

In an embodiment, referring to FIG. 8 to FIG. 10, an end of the anti-disassembly connector 100 includes a male thread portion 30. The male thread portion 30 may be located at an end of the column body 10, the anti-disassembly protrusion 20 may be located at the other end of the column body 10 away from the male thread portion 30, and the base 40 may be connected to a side of the anti-disassembly protrusion 20 away from the male thread portion 30. In this way, the anti-disassembly protrusion 20 may be more firmly disposed on the anti-disassembly connector 100.

An anti-disassembly connection assembly 200 is further provided in the present invention. The anti-disassembly connection assembly 200 includes a fastener 210 and the anti-disassembly connector 100. Either of the anti-disassembly connector 100 and the fastener 210 includes the female thread portion 2102 provided with a female threaded hole, i.e., the through hole 11, the other one includes a male thread portion 30, and the male thread portion 30 is threadedly connected to the female thread portion 2102.

The anti-disassembly connection assembly 200 provided in the present invention has an anti-disassembly function. The operator may only tighten the fastener 210 and the anti-disassembly connector 100 with a nut wrench matched with the fastener 210 and a joint wrench matched with the anti-disassembly connector 100, but cannot loosen the fastener 210 and the anti-disassembly connector 100.

In the embodiments referring to FIG. 1 to FIG. 7, the through hole 11 may be disposed in the anti-disassembly connector 100, the female thread in the through hole 11 may be defined as the female thread portion 2102, an end of the fastener 210 protruding outwards along an axis thereof is define as the male thread portion 30, and the fastener 210 may extend into the through hole 11 and be threadedly connected to the anti-disassembly connector 100 via the male thread portion 30.

In this way, a more stable and reliable threaded connection may be formed between the anti-disassembly connector 100 and the fastener 210.

Specifically, in the embodiment, the anti-disassembly connector 100 may be an anti-disassembly joint, the fastener 210 may be a fixing member. The anti-disassembly joint may be threadedly connected to the fixing member. In some embodiments, the anti-disassembly connector 100 may also be an anti-disassembly nut, the fastener 210 may be a pipe joint. In some embodiments, both the fastener 210 and the pipe joint can be provided with an anti-disassembly structure, i.e., both the peripheral wall of the anti-disassembly connector 100 and the peripheral wall of the fastener 210 can be provided with the anti-disassembly protrusion 20.

Furthermore, after the fastener 210 is mounted and fixed with the anti-disassembly connector 100, a diameter of the anti-disassembly connector 100 is a maximum diameter of the anti-disassembly connection assembly 200.

It should be noted that in the embodiment, the diameter of the anti-disassembly connector 100 may refer to a maximum diameter of each parts of the anti-disassembly connector 100. For example, the diameter of the anti-disassembly connector 100 refers to the maximum outer diameter of the anti-disassembly protrusion 20, but not the diameter of the peripheral wall of the anti-disassembly connector 100. When the anti-disassembly connector 100 further includes the base 40, the diameter of the anti-disassembly connector 100 may refer to the outer diameter of the base 40.

In this way, one skilled in the art may use the external tool to grip the outer portion of the anti-disassembly connector 100, so as to forcibly disassemble the anti-disassembly connector 100 and the fastener 210. The one skilled in the art may use the external tool to grip a position of the anti-disassembly connector 100 having a maximum diameter, preventing the external tool from crushing other elements of the anti-disassembly connection assembly 200.

In the embodiments referring to FIG. 8 to FIG. 10, the anti-disassembly protrusion 20 may be located at an end of the anti-disassembly connector 100, and the other end of the anti-disassembly connector 100 may be provided with a male thread portion 30, and the force releasing surface 22 may face the male thread portion 30. An assembly hole 2101 may be disposed in the fastener 210, a female thread portion 2102 may be disposed in the assembly hole 2101, and the female thread portion 2102 may match with the male thread portion 30 of the anti-disassembly connector 100.

In a process of mounting the anti-disassembly connection assembly 200, an end of the anti-disassembly connector 100 provided with the male thread portion 30 may extend into the assembly hole 2101 of the fastener 210, and the fastener 210 may be threadedly connected to the anti-disassembly connector 100 by matching the female thread portion 2102 with the male thread portion 30. The female thread portion 2102 and the male thread portion 30 may be processed in a mature and simple way, thus reducing difficulty of processing the anti-disassembly connection assembly 200 and increasing productivity of the anti-disassembly connection assembly 200.

In the embodiment, the force releasing surface 22 may face the male thread portion 30, and the force receiving surface 21 and the force releasing surface 22 may be disposed at two sides of the anti-disassembly protrusion 20 along the circumference of the anti-disassembly connector 100. In the process of mounting the anti-disassembly connector 100, the external tool may act on the force receiving surface 21 of the anti-disassembly protrusion 20, enabling the anti-disassembly connector 100 to match with the external tool and rotate along a direction (anticlockwise or clockwise), and finally mount the anti-disassembly connector 100 with the fastener 210. When the anti-disassembly connector 100 needs to be disassembled, the anti-disassembly connector 100 may be rotated along an opposite direction to that in the mounting process. At this moment, due to effect of the force releasing surface 22, when the anti-disassembly connector 100 is loosened in the opposite direction with the external tool, external tool may be raised by the force releasing surface 22, making the external tool cannot be stressed, and the anti-disassembly connector 100 cannot be loosened in the opposite direction. Therefore, the anti-disassembly function of the anti-disassembly connector 100 can be achieved merely by disposing the anti-disassembly protrusion 20, and the force receiving surface 21 and the force releasing surface 22 disposed on the anti-disassembly protrusion 20. The structure of the above anti-disassembly connector 100 is simple and easy to assemble, which greatly reduces the cost of using the air conditioner. Because the force releasing surface 22 faces the male thread portion 30, it further increases difficulty of disassembling the anti-disassembly connector 100.

The anti-disassembly connection assembly 100 provided in the present invention has an anti-disassembly function. The anti-disassembly connector 100 can be non-removably connected to the fastener 210. The operator may merely tighten the fastener 210 with the anti-disassembly connector 100 by the nut wrench and the joint wrench, but cannot loosen the fastener 210 and the anti-disassembly connector 100. In addition, the anti-disassembly protrusion 20 may be disposed on the peripheral wall of the anti-disassembly connector 100, which is more convenient for the operator to quickly put the joint wrench on the peripheral wall of the anti-disassembly connector 100, improving convenience of operation, especially for the anti-disassembly connector 100 with small size. Furthermore, the anti-disassembly protrusion 20 is disposed on the peripheral wall of the anti-disassembly connector 100, which may increase the length of the force arm or the force couple arm of the screwing torque of the joint wrench to the anti-disassembly connector 100, so that the operator may finish the connection between the fastener 210 and the anti-disassembly connector 100 more effortlessly.

An air conditioner provided in the present invention includes a first pipe 310, a second pipe 320, and the anti-disassembly connection assembly 200. The first pipe 310 and the second pipe 320 are connected to the anti-disassembly connector 100 and the fastener 210 respectively. In this way, assembly complexity of the air conditioner may be greatly reduced and assembly efficiency of the air conditioner may be improved.

When the air conditioner is mounted, the first pipe 310 may be fixed to the anti-disassembly connector 100, and an end of the second pipe 320 may be clamped between the anti-disassembly connector 100 and the fastener 210. Therefore, the end of the second pipe 320 may be mounted in an assembly chamber of the fastener 210, then the anti-disassembly connector 100 may be mounted with the fastener 210, so as to assemble the first pipe 310 with the second pipe 320. In this way, the assembly complexity of the air conditioner may be greatly reduced and the assembly efficiency of the air conditioner may be improved.

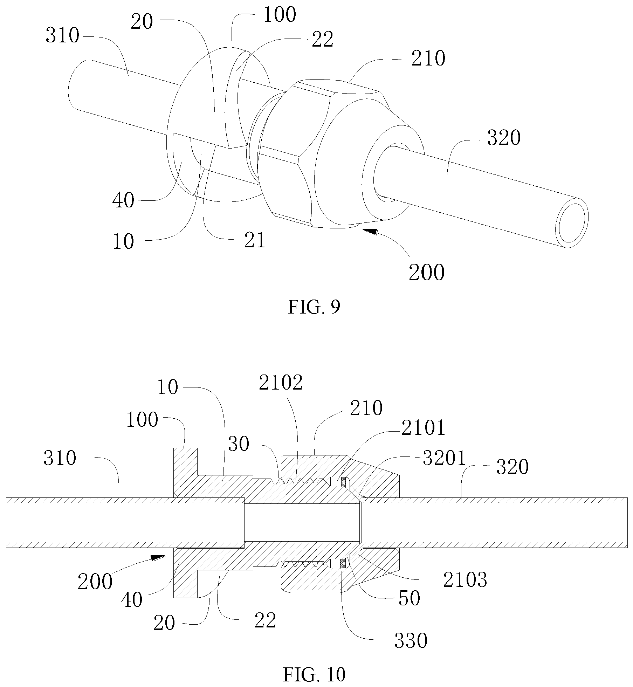

In an embodiment, referring to FIG. 10, a sealing ring 330 may be disposed between the anti-disassembly connector 100 and the fastener 210. The sealing ring 330 may be sleeved on an end of the anti-disassembly connector 100 near the second pipe 320. In this way, the sealing ring 330 may prevent fluid medium from leaking from the second pipe 320.

Furthermore, the air conditioner may further include an indoor unit of air conditioner and an outdoor unit of air conditioner. The first pipe 310 may be connected to the indoor unit of air conditioner, and the second pipe 320 may be connected to the outdoor unit of air conditioner.

In an embodiment, the anti-disassembly connector 100 or the fastener 210 may be provided with a positioning section 111, and the positioning section 111 may abut against either of the first pipe 310 and the second pipe 320 and is configured to locate the first pipe 310 or the second pipe 320.

Specifically, in the embodiments referring to FIG. 1 to FIG. 7, the through hole 11 may be disposed in the anti-disassembly connector 100, and the female thread portion 2102 and the positioning section 111 connected with each other may be disposed in the through hole 11. An end of the fastener 210 protruding outwards along an axis thereof is define as a male thread portion 30, and the fastener 210 may extend into the through hole 11 via the male thread portion 30 and be threadedly connected to the anti-disassembly connector 100. A maximum outer diameter of the first pipe 310 or the second pipe 320 extending into the through hole 11 may be greater than a minimum inner diameter of the positioning section 111, and the first pipe 310 or the second pipe 320 may move in the through hole 11 until the positioning section 111 abuts against an peripheral wall of either of the first pipe 310 and the second pipe 320. Therefore, the positioning section 111 may limit the movement of the first pipe 310 or the second pipe 320 along a direction of extending into the through hole 11 and the first pipe 310 or the second pipe 320 leaving the through hole 11. In the embodiments referring to FIG. 8 to FIG. 10, the positioning section 111 may be disposed on the fastener 210, and a positioning principle may be substantially the same as that described above and not be repeated herein.

In this way, the more stable and reliable threaded connection may be formed between the anti-disassembly connector 100 and the fastener 210. An inner wall surface of the positioning section 111 may abut against an peripheral wall surface of either of the first pipe 310 and the second pipe 320, thereby limiting the movement of either of the first pipe 310 and the second pipe 320 in the through hole 11 and preventing either of the first pipe 310 and the second pipe 320 from sliding out from the through hole 11.

Furthermore, referring to FIG. 10, the positioning section 111 may be provided with a taper-shaped positioning surface, the first pipe 310 or the second pipe 320 may be provided with a flared portion at an end, and the taper-shaped positioning surface may abut against an peripheral wall of the flared portion when the first pipe 310 or the second pipe 320 extends into the through hole 11.

Specifically, in the embodiment, a side of the positioning section 111 with a smaller inner diameter may be near an end of the anti-disassembly connector 100. Accordingly, the flared portion may be disposed at the end of the first pipe 310 or the second pipe 320 extending into the through hole 11. An peripheral wall of the flared portion may be tapered-shaped and abut against the inner wall of the positioning section 111. When the fastener 210 is mounted with the anti-disassembly connector 100, the male thread portion 30 of the fastener 210 may extend into the through hole 11 and press the flared portion, so that the flared portion may be limited between the male thread portion 30 and the inner wall surface of the positioning section 111, thereby achieving the positioning of the first pipe 310 or the second pipe 320 with the positioning section 111.

In this way, it can ensure that the first pipe 310 or the second pipe 320 relative to the anti-disassembly connector 100 or the fastener 210 may be coaxially disposed , and positioning effect of the first pipe 310 or the second pipe 320 may be more reliable, and the first pipe 310 or the second pipe 320 may be hardly shake. In addition, the positioning section 111 may abuts against the peripheral wall of the flared portion, so that the anti-disassembly connection assembly 200 may have a better sealing effect and prevent refrigerant from leaking out of the through hole 11.

It may be understood that in other embodiments, the positioning section 111 may be a hole in a shape of step or other shapes. Accordingly, the flared portion may also be a surface of revolution in other shapes. For example, such as the flared portion may also be a reducer section defined by the end of the first pipe 310 or the second pipe 320 protruding along a radial direction thereof. When the fastener 210 is mounted with the anti-disassembly connector 100, the flared portion may still be limited between the male thread portion 30 and the inner wall surface of the positioning section 111, thereby positioning the first pipe 310 or the second pipe 320.

Furthermore, referring to FIG. 10, an end of the anti-disassembly connector 100 may be provided with a first taper-shaped surface 50 on a peripheral wall, and a second taper-shaped surface 2103 may be correspondingly disposed in the assembly hole 2101 of the fastener 210. The end of the second pipe 320 may be provided with a taper-shaped clamping portion 3201, and the taper-shaped clamping portion 3201 may be clamped between the first taper-shaped surface 50 and the second taper-shaped surface 2103. In the mounting process, the taper-shaped clamping portion 3201 of the second pipe 320 may be clamped at the second taper-shaped surface 2103, then the anti-disassembly connector 100 may be assembled with the fastener 210, and the taper-shaped clamping portion 3201 may be clamped between the first taper-shaped surface 50 and the second taper-shaped surface 2103. The first taper-shaped surface 50 and the second taper-shaped surface 2103 may be easy to process. In this way, a contact area between the taper-shaped clamping portion 3201 and the anti-disassembly connector 100 and a contact area between the taper-shaped clamping portion 3201 and the fastener 210 may be increased, which facilitates assembly stability improvement of the air conditioner.

## Claims

1. An anti-disassembly connection assembly, comprising a fastener and the anti-disassembly connector (100),
wherein either of the anti-disassembly connector (100) and the fastener comprises a female thread portion (2102), the other one comprises a male thread portion (30), and the female thread portion (2102) is threadedly connected to the male thread portion (30),
wherein the anti-disassembly connector (100) comprises an anti-disassembly protrusion (20) disposed on a peripheral wall of the anti-disassembly connector (100), wherein the anti-disassembly protrusion (20) comprises a force receiving surface (21) and a force releasing surface, and the force receiving surface (21) and the force releasing surface are arranged on both sides of anti-disassembly protrusion (20) along a circumference of the anti-disassembly connector (100); and
the force receiving surface (21) is configured to allow an external tool to assemble the anti-disassembly connector (100), and
the force releasing surface is configured to make the external tool to be pushed away by the anti-disassembly connector (100) along an axis of the anti-disassembly connector (100) when the anti-disassembly connector (100) is disassembled by the external tool,
**characterized in that**
a maximum outer diameter of the anti-disassembly protrusion (20) is a maximum diameter of the anti-disassembly connector (100), and
the maximum diameter of the anti-disassembly connector (100) is a maximum diameter of the anti-disassembly connection assembly (200).

2. The anti-disassembly connection assembly of claim 1, wherein a force receiving edge (211) is defined between an outer circumference surface of the anti-disassembly protrusion (20) and force receiving surface (21), and the external tool is capable of clamping the force receiving edge (211) and applying torque on the force receiving edge (211).

3. The anti-disassembly connection assembly of claim 2, wherein the force receiving edge (211) is parallel to the axis of the anti-disassembly connector (100); and/or,
an intersection line (212) is defined between the force receiving surface (21) and an outer circumference surface of the anti-disassembly connector (100), and the force receiving surface (21) is perpendicular to a tangent plane of the outer circumference surface of the anti-disassembly connector (100) at the intersection line (212).

4. The anti-disassembly connection assembly of claim 2, wherein the force receiving surface (21) is a plane, and the force receiving surface (21) is parallel to a plane of the axis of the anti-disassembly connector (100).

5. The anti-disassembly connection assembly of claim 2, wherein the force releasing surface is selected from an inclined surface, a curved surface, or a concave surface.

6. The anti-disassembly connection assembly of claim 5, wherein the force releasing surface is smoothly engaged with the outer circumference surface of the anti-disassembly connector (100).

7. The anti-disassembly connection assembly of claim 6, further comprising a base (40), wherein the base (40) is located at an end of the anti-disassembly connector (100) or on the peripheral wall of the anti-disassembly connector (100), the base (40) comprises a first end surface relatively near the anti-disassembly protrusion (20), and the first end surface is smoothly engaged with the force releasing surface; and/or,
the other end of the anti-disassembly connector (100) is provided with a male thread portion (30),
the anti-disassembly connector (100) further comprises a column body (10), the male thread portion (30) is located at an end of the column body (10), the anti-disassembly protrusion (20) is located at the other end of the column body (10) away from the male thread portion (30), and the base (40) is connected to a side of the anti-disassembly protrusion (20) away from the male thread portion (30); or,
a through hole (11) is disposed in the anti-disassembly connector (100), and a female thread portion (2102) is located in the through hole (11).

8. The anti-disassembly connection assembly of claim 2, wherein a plurality of anti-disassembly protrusions (20) are distributed along a circumference of the anti-disassembly connector (100), and the force receiving surface (21) and the force releasing surface (22) are alternately distributed along the circumference of the anti-disassembly connector (100).

9. The anti-disassembly connection assembly of claim 8, wherein the anti-disassembly protrusion (20) comprises a first protrusion (23) and a second protrusion (24), which are rotationally and symmetrically disposed around the axis of the anti-disassembly connector (100) as a center; and/or,
a distance between the force receiving edge (211) of the first protrusion (23) and the force receiving edge (211) of the second protrusion (24) is a maximum outer diameter of the anti-disassembly connector (100).

10. The anti-disassembly connection assembly of claim 1, wherein the anti-disassembly protrusion (20) is located at an end of the anti-disassembly connector (100), and the other end of the anti-disassembly connector (100) provided with the male thread portion (30), and the force releasing surface (22) is opposite to the male thread (30); and
the fastener is provided with an assembly hole, the assembly hole is provided with the female thread portion (2102), and the female thread portion matches with the male thread portion (30)of the anti-disassembly connector (100).

11. The anti-disassembly connection assembly of claim 1, wherein the anti-disassembly connector (100) is provided with a through hole (11), the through hole (11) is provided with the female thread portion (2102), an end of the fastener protruding outwards along an axis thereof is provided with the male thread portion (30), and the fastener extends into the through hole (11) via the male thread portion (30)and is threadedly connected to the anti-disassembly connector (100).

12. An air conditioner, **characterized by** comprising a first pipe (310), a second pipe (320), and the anti-disassembly connection assembly of any one of claims 1 to 11, wherein the first pipe (310) and the second pipe (320) are connected to the anti-disassembly connector (100) and the fastener, respectively.

13. The air conditioner of claim 12, wherein the first pipe (310) is fixed to the anti-disassembly connector (100), and an end of the second pipe (320) is clamped between the anti-disassembly connector (100) and the fastener; and/or,
a peripheral wall of an end of the anti-disassembly connector (100) is provided with a first taper-shaped surface (50), an assembly hole of the fastener is provided with a second taper-shaped surface (2103), correspondingly, the end of the second pipe (320) is provided with a taper-shaped clamping portion (3201), and the taper-shaped clamping portion (3201) is clamped between the first taper-shaped surface (50) and the second taper-shaped surface (2103).

14. The air conditioner of claim 12, wherein the anti-disassembly connector (100) or the fastener is provided with a positioning section (111), and the positioning section (111) abuts against the first pipe (310) and is configured to locate the first pipe (310); or,
the positioning section (111) abuts against the second pipe (320) and is configured to locate the second pipe (320); and/or,
the positioning section (111) is provided with a taper-shaped positioning surface, the first pipe (310) or the second pipe (320) is provided with a flared portion at an end, and the taper-shaped positioning surface abuts against a peripheral wall of the flared portion.

## Patentansprüche

1. Demontagesichere Verbindungsanordnung, umfassend ein Befestigungselement und den demontagesicheren Verbinder (100),
worin einer bzw. eines von dem demontagesicheren Verbinder (100) und dem Befestigungselement einen Innengewindeabschnitt (2102) umfasst, der bzw. das andere einen Außengewindeabschnitt (30) umfasst, und der Innengewindeabschnitt (2102) mit dem Außengewindeabschnitt (30) gewindemäßig verbunden ist,
worin der demontagesichere Verbinder (100) einen demontagesicheren Vorsprung (20) umfasst, der an einer Umfangswand des demontagesicheren Verbinders (100) angeordnet ist, worin der demontagesichere Vorsprung (20) eine kraftaufnehmende Fläche (21) und eine kraftfreisetzende Fläche umfasst, und die kraftaufnehmende Fläche (21) und die kraftfreisetzende Fläche an beiden Seiten des demontagesicheren Vorsprungs (20) entlang eines Umfangs des demontagesicheren Verbinders (100) angeordnet sind; und
die kraftaufnehmende Fläche (21) dazu eingerichtet ist, einem äußeren Werkzeug zu ermöglichen, den demontagesicheren Verbinder (100) zu montieren, und
die kraftfreisetzende Fläche dazu eingerichtet ist, zu bewirken, dass das äußere Werkzeug von dem demontagesicheren Verbinder (100) entlang einer Achse des demontagesicheren Verbinders (100) weggeschoben wird, wenn der demontagesichere Verbinder (100) von dem äußeren Werkzeug demontiert wird,
**dadurch gekennzeichnet, dass**
ein maximaler Außendurchmesser des demontagesicheren Vorsprungs (20) ein maximaler Durchmesser des demontagesicheren Verbinders (100) ist, und
der maximale Durchmesser des demontagesicheren Verbinders (100) ein maximaler Durchmesser der demontagesicheren Verbindungsanordnung (200) ist.

2. Demontagesichere Verbindungsanordnung nach Anspruch 1, worin eine kraftaufnehmende Kante (211) zwischen einer äußeren Umfangsfläche des demontagesicheren Vorsprungs (20) und der kraftaufnehmenden Fläche (21) definiert ist, und das äußere Werkzeug dazu fähig ist, die kraftaufnehmende Kante (211) zu klemmen und ein Drehmoment auf die kraftaufnehmende Kante (211) aufzuwenden.

3. Demontagesichere Verbindungsanordnung nach Anspruch 2, worin die kraftaufnehmende Kante (211) zur Achse des demontagesicheren Verbinders (100) parallel ist; und/oder,
eine Schnittlinie (212) zwischen der kraftaufnehmenden Fläche (21) und einer äußeren Umfangsfläche des demontagesicheren Verbinders (100) definiert ist, und die kraftaufnehmende Fläche (21) zu einer Tangentialebene der äußeren Umfangsfläche des demontagesicheren Verbinders (100) an der Schnittlinie (212) senkrecht ist.

4. Demontagesichere Verbindungsanordnung nach Anspruch 2, worin die kraftaufnehmende Fläche (21) eine Ebene ist, und die kraftaufnehmende Fläche (21) zu einer Ebene der Achse des demontagesicheren Verbinders (100) parallel ist.

5. Demontagesichere Verbindungsanordnung nach Anspruch 2, worin die kraftfreisetzende Fläche aus einer geneigten Fläche, einer gekrümmten Fläche oder einer konkaven Fläche ausgewählt ist.

6. Demontagesichere Verbindungsanordnung nach Anspruch 5, worin die kraftfreisetzende Fläche in die äußere Umfangsfläche des demontagesicheren Verbinders (100) leichtgängig eingreift.

7. Demontagesichere Verbindungsanordnung nach Anspruch 6, ferner umfassend eine Basis (40), worin die Basis (40) an einem Ende des demontagesicheren Verbinders (100) oder an der Umfangswand des demontagesicheren Verbinders (100) gelegen ist, die Basis (40) eine erste Endfläche relativ nahe dem demontagesicheren Vorsprung (20) umfasst, und die erste Endfläche in die kraftfreisetzende Fläche leichtgängig eingreift; und/oder,
das andere Ende des demontagesicheren Verbinders (100) mit einem Außengewindeabschnitt (30) versehen ist,
der demontagesichere Verbinder (100) ferner einen Säulenkörper (10) umfasst, der Außengewindeabschnitt (30) an einem Ende des Säulenkörpers (10) gelegen ist, der demontagesichere Vorsprung (20) an dem anderen Ende des Säulenkörpers (10) weg vom Außengewindeabschnitt (30) gelegen ist und die Basis (40) mit einer Seite des demontagesicheren Vorsprungs (20) weg vom Außengewindeabschnitt (30) verbunden ist; oder,
ein Durchgangsloch (11) im demontagesicheren Verbinder (100) angeordnet ist, und ein Innengewindeabschnitt (2102) im Durchgangsloch (11) gelegen ist.

8. Demontagesichere Verbindungsanordnung nach Anspruch 2, worin eine Vielzahl von demontagesicheren Vorsprüngen (20) entlang eines Umfangs des demontagesicheren Verbinders (100) verteilt sind, und die kraftaufnehmende Fläche (21) und die kraftfreisetzende Fläche (22) entlang des Umfangs des demontagesicheren Verbinders (100) abwechselnd verteilt sind.

9. Demontagesichere Verbindungsanordnung nach Anspruch 8, worin der demontagesichere Vorsprung (20) einen ersten Vorsprung (23) und einen zweiten Vorsprung (24) umfasst, die um die Achse des demontagesicheren Verbinders (100) als ein Zentrum drehbar und symmetrisch angeordnet sind; und/oder,
ein Abstand zwischen der kraftaufnehmenden Kante (211) des ersten Vorsprungs (23) und der kraftaufnehmenden Kante (211) des zweiten Vorsprungs (24) ein maximaler Außendurchmesser des demontagesicheren Verbinders (100) ist.

10. Demontagesichere Verbindungsanordnung nach Anspruch 1, worin der demontagesichere Vorsprung (20) an einem Ende des demontagesicheren Verbinders (100) gelegen ist, und das andere Ende des demontagesicheren Verbinders (100) mit dem Außengewindeabschnitt (30) versehen ist, und die kraftfreisetzende Fläche (22) dem Außengewinde (30) gegenüberliegend ist; und
das Befestigungselement mit einem Montageloch versehen ist, das Montageloch mit dem Innengewindeabschnitt (2102) versehen ist, und der Innengewindeabschnitt zum Außengewindeabschnitt (30) des demontagesicheren Verbinders (100) passt.

11. Demontagesichere Verbindungsanordnung nach Anspruch 1, worin der demontagesichere Verbinder (100) mit einem Durchgangsloch (11) versehen ist, das Durchgangsloch (11) mit dem Innengewindeabschnitt (2102) versehen ist, ein Ende des Befestigungselementes, das nach außen entlang einer Achse davon vorspringt, mit dem Außengewindeabschnitt (30) versehen ist, und das Befestigungselement sich in das Durchgangsloch (11) hinein über den Außengewindeabschnitt (30) erstreckt und mit dem demontagesicheren Verbinder (100) gewindemäßig verbunden ist.

12. Klimaanlage, **dadurch gekennzeichnet, dass** sie ein erstes Rohr (310), ein zweites Rohr (320) und die demontagesichere Verbindungsanordnung nach einem der Ansprüche 1 bis 11 umfasst, worin das erste Rohr (310) und das zweite Rohr (320) jeweils mit dem demontagesicheren Verbinder (100) und dem Befestigungselement verbunden sind.

13. Klimaanlage nach Anspruch 12, worin das erste Rohr (310) am demontagesicheren Verbinder (100) fixiert ist, und ein Ende des zweiten Rohres (320) zwischen dem demontagesicheren Verbinder (100) und dem Befestigungselement geklemmt ist; und/oder,
eine Umfangswand eines Endes des demontagesicheren Verbinders (100) mit einer ersten sich verjüngenden Fläche (50) versehen ist, ein Montageloch des Befestigungselementes mit einer zweiten sich verjüngenden Fläche (2103) versehen ist, dementsprechend das Ende des zweiten Rohres (320) mit einem sich verjüngenden Klemmabschnitt (3201) versehen ist, und der sich verjüngende Klemmabschnitt (3201) zwischen der ersten sich verjüngenden Fläche (50) und der zweiten sich verjüngenden Fläche (2103) geklemmt ist.

14. Klimaanlage nach Anspruch 12, worin der demontagesichere Verbinder (100) oder das Befestigungselement mit einem Positionierungsabschnitt (111) versehen ist, und der Positionierungsabschnitt (111) gegen das erste Rohr (310) anstößt und dazu eingerichtet ist, das erste Rohr (310) zu lozieren; oder
der Positionierungsabschnitt (111) gegen das zweite Rohr (320) anstößt und dazu eingerichtet ist, das zweite Rohr (320) zu lozieren; und/oder,
der Positionierungsabschnitt (111) mit einer sich verjüngenden Positionierungsfläche versehen ist, das erste Rohr (310) oder das zweite Rohr (320) mit einem aufgeweiteten Abschnitt an einem Ende versehen ist, und die sich verjüngende Positionierungsfläche gegen eine Umfangswand des aufgeweiteten Abschnitts anstößt.

## Revendications

1. Ensemble de raccordement anti-démontage, comprenant un élément de fixation et le raccord anti-démontage (100),
dans lequel l'un ou l'autre du raccord anti-démontage (100) et de l'élément de fixation comprend une partie filetée femelle (2102), l'autre comprend une partie filetée mâle (30), et la partie filetée femelle (2102) est reliée par filetage à la partie filetée mâle (30),
dans lequel le raccord anti-démontage (100) comprend une saillie anti-démontage (20) disposée sur une paroi périphérique du raccord anti-démontage (100), dans lequel la saillie anti-démontage (20) comprend une surface de réception de force (21) et une surface de libération de force, et la surface de réception de force (21) et la surface de libération de force sont agencées des deux côtés de la saillie anti-démontage (20) sur une circonférence du raccord anti-démontage (100) ; et
la surface de réception de force (21) est configurée pour permettre à un outil externe d'assembler le raccord anti-démontage (100), et
la surface de libération de force est configurée pour faire en sorte que l'outil externe soit repoussé par le raccord anti-démontage (100) le long d'un axe du raccord anti-démontage (100) lorsque le raccord anti-démontage (100) est démonté par l'outil externe,
**caractérisé en ce que**
un diamètre extérieur maximal de la saillie anti-démontage (20) est un diamètre maximal du raccord anti-démontage (100), et
le diamètre maximal du raccord anti-démontage (100) est un diamètre maximal de l'ensemble de raccordement anti-démontage (200).

2. Ensemble de raccordement anti-démontage selon la revendication 1, dans lequel un bord de réception de force (211) est défini entre une surface de circonférence extérieure de la saillie anti-démontage (20) et la surface de réception de force (21), et l'outil externe est apte à serrer le bord de réception de force (211) et appliquer un couple sur le bord de réception de force (211).

3. Ensemble de raccordement anti-démontage selon la revendication 2, dans lequel le bord de réception de force (211) est parallèle à l'axe du raccord anti-démontage (100) ; et/ou,
une ligne d'intersection (212) est définie entre la surface de réception de force (21) et une surface de circonférence extérieure du raccord anti-démontage (100), et la surface de réception de force (21) est perpendiculaire à un plan tangent de la surface de circonférence extérieure du raccord anti-démontage (100) au niveau de la ligne d'intersection (212).

4. Ensemble de raccordement anti-démontage selon la revendication 2, dans lequel la surface de réception de force (21) est un plan, et la surface de réception de force (21) est parallèle à un plan de l'axe du raccord anti-démontage (100).

5. Ensemble de raccordement anti-démontage selon la revendication 2, dans lequel la surface de libération de force est choisie parmi une surface inclinée, une surface incurvée ou une surface concave.

6. Ensemble de raccordement anti-démontage selon la revendication 5, dans lequel la surface de libération de force est facilement mise en prise avec la surface de circonférence extérieure du raccord anti-démontage (100).

7. Ensemble de raccordement anti-démontage selon la revendication 6, comprenant en outre une base (40), dans lequel la base (40) est située à une extrémité du raccord anti-démontage (100) ou sur la paroi périphérique du raccord anti-démontage (100), la base (40) comprend une première surface d'extrémité relativement proche de la saillie anti-démontage (20), et la première surface d'extrémité est facilement mise en prise avec la surface de libération de force ; et/ou,
l'autre extrémité du raccord anti-démontage (100) est dotée d'une partie filetée mâle (30),
le raccord anti-démontage (100) comprend en outre un corps de colonne (10), la partie filetée mâle (30) est située à une extrémité du corps de colonne (10), la saillie anti-démontage (20) est située à l'autre extrémité du corps de colonne (10) à l'opposé de la partie filetée mâle (30), et la base (40) est reliée à un côté de la saillie anti-démontage (20) à l'opposé de la partie filetée mâle (30) ; ou,
un trou traversant (11) est disposé dans le raccord anti-démontage (100), et une partie filetée femelle (2102) est située dans le trou traversant (11).

8. Ensemble de raccordement anti-démontage selon la revendication 2, dans lequel une pluralité de saillies anti-démontage (20) sont réparties sur une circonférence du raccord anti-démontage (100), et la surface de réception de force (21) et la surface de libération de force (22) sont réparties en alternance sur la circonférence du raccord anti-démontage (100).

9. Ensemble de raccordement anti-démontage selon la revendication 8, dans lequel la saillie anti-démontage (20) comprend une première saillie (23) et une seconde saillie (24), qui sont disposées de manière rotative et symétrique autour de l'axe du raccord anti-démontage (100) en tant que centre ; et/ou,
une distance entre le bord de réception de force (211) de la première saillie (23) et le bord de réception de force (211) de la seconde saillie (24) est un diamètre extérieur maximal du raccord anti-démontage (100).

10. Ensemble de raccordement anti-démontage selon la revendication 1, dans lequel la saillie anti-démontage (20) est située à une extrémité du raccord anti-démontage (100), et l'autre extrémité du raccord anti-démontage (100) étant dotée de la partie filetée mâle (30), et la surface de libération de force (22) est opposée au filetage mâle (30) ; et
l'élément de fixation est doté d'un trou d'assemblage, le trou d'assemblage est doté de la partie filetée femelle (2102), et la partie filetée femelle correspond à la partie filetée mâle (30) du raccord anti-démontage (100).

11. Ensemble de raccordement anti-démontage selon la revendication 1, dans lequel le raccord anti-démontage (100) est doté d'un trou traversant (11), le trou traversant (11) est doté de la partie filetée femelle (2102), une extrémité de l'élément de fixation faisant saillie vers l'extérieur le long d'un axe de celui-ci est dotée de la partie filetée mâle (30), et l'élément de fixation s'étend dans le trou traversant (11) par l'intermédiaire de la partie filetée mâle (30) et est relié par filetage au raccord anti-démontage (100).

12. Climatiseur, **caractérisé en ce qu'**il comprend un premier tuyau (310), un second tuyau (320) et l'ensemble de raccordement anti-démontage de l'une quelconque des revendications 1 à 11, dans lequel le premier tuyau (310) et le second tuyau (320) sont reliés au raccord anti-démontage (100) et à l'élément de fixation, respectivement.

13. Climatiseur selon la revendication 12, dans lequel le premier tuyau (310) est fixé au raccord anti-démontage (100), et une extrémité du second tuyau (320) est serrée entre le raccord anti-démontage (100) et l'élément de fixation ; et/ou,
une paroi périphérique d'une extrémité du raccord anti-démontage (100) est dotée d'une première surface conique (50), un trou d'assemblage de l'élément de fixation est doté d'une seconde surface conique (2103), de manière correspondante, l'extrémité du second tuyau (320) est dotée d'une partie de serrage conique (3201), et la partie de serrage conique (3201) est serrée entre la première surface conique (50) et la seconde surface conique (2103).

14. Climatiseur selon la revendication 12, dans lequel le raccord anti-démontage (100) ou l'élément de fixation est doté d'une section de positionnement (111), et la section de positionnement (111) vient en butée contre le premier tuyau (310) et est configurée pour situer le premier tuyau (310) ; ou,
la section de positionnement (111) vient en butée contre le second tuyau (320) et est configurée pour situer le second tuyau (320) ; et/ou,
la section de positionnement (111) est dotée d'une surface de positionnement conique, le premier tuyau (310) ou le second tuyau (320) est doté d'une partie évasée à une extrémité, et la surface de positionnement conique vient en butée contre une paroi périphérique de la partie évasée.
